# FASCICULE DE BREVET EUROPEEN

(11) **EP 3 767 240 B1**
(45) Date de publication et mention de la délivrance du brevet: **09.08.2023**
(21) Numéro de dépôt: 20186273.7
(22) Date de dépôt: 16.07.2020
(51) Int. Cl.: G01C 23/00, G06F 3/14

(54) **DISPOSITIF D'AFFICHAGE ÉLECTRONIQUE POUR PLANCHE DE BORD TOUT ÉCRAN D'UN VÉHICULE, VÉHICULE ET PROCÉDÉ D'AFFICHAGE ASSOCIÉS**
ELEKTRONISCHE ANZEIGEVORRICHTUNG FÜR EIN VOLLBILDSCHIRM-ARMATURENBRETT EINES FAHRZEUGS, ENTSPRECHENDES FAHRZEUG UND ANZEIGEVERFAHREN
ELECTRONIC DISPLAY DEVICE FOR AN ALL-SCREEN DASHBOARD OF A VEHICLE, ASSOCIATED VEHICLE AND DISPLAY METHOD

(30) Priorité: 17.07.2019 FR 1908064
(43) Date de publication de la demande: 20.01.2021
(73) Titulaire: THALES, 92400 Courbevoie (FR)
(72) Inventeur: CAILLAUD, Maxime, 33701 Merignac (FR); LE ROUX, Yannick, 33701 Merignac (FR); ANDRE, Cécile, 33701 Merignac (FR)
(74) Mandataire: Lavoix

(56) Documents cités:
- FR-A1- 3 037 136
- US-B1- 9 134 891

## Description

La présente invention concerne un dispositif d'affichage électronique pour planche de bord tout écran d'un système de pilotage de véhicule, selon la revendication 1, ladite planche de bord, comprenant une pluralité d'écrans, au moins deux écrans de la pluralité d'écrans étant propres à afficher simultanément des flux vidéo distincts associés respectivement à des formats d'affichages distincts.

L'invention se rapporte également à un véhicule selon la revendication 8, tel qu'un aéronef, comprenant une planche de bord tout écran et comprenant en outre un tel dispositif d'affichage.

L'invention concerne également un procédé d'affichage selon la revendication 9 pour planche de bord tout écran d'un véhicule mis en oeuvre par un tel dispositif d'affichage du véhicule.

L'invention concerne également un produit programme d'ordinateur selon la revendication 10 comportant des instructions logicielles qui, lorsque mis en oeuvre par un équipement informatique, met en oeuvre un tel procédé d'affichage.

On entend par véhicule, tout engin propre à se déplacer entre deux positions géographiques distinctes. Un tel véhicule correspond par exemple à un aéronef.

On entend par aéronef tout engin piloté susceptible de voler au moins au sein de l'atmosphère terrestre, tel qu'un avion ou un hélicoptère par exemple.

On entend par format une région d'écran dédiée à l'affichage d'un ensemble d'éléments associé à une fonction prédéterminée du système de pilotage. Par exemple, le format dédié à l'affichage des paramètres de vol principaux PFD (de l'anglais *Primary Flight Display*) correspond à une région d'écran regroupant l'ensemble des éléments permettant au pilote de contrôler et/ou piloter son véhicule à savoir l'attitude, la vitesse, l'altitude, etc.

La présente invention concerne le domaine de l'affichage pour planche de bord tout écran (de l'anglais *Glass Cockpit*)*,* notamment dans un cockpit d'aéronef encore dénommé CDS (de l'anglais *Cockpit Display System*) ou dans tout autre véhicule comprenant un poste de pilotage avec des éléments d'affichage reconfigurables.

Les nouvelles générations de solutions cockpits sont équipées de planche de bord tout écran, dans laquelle les équipements matériels dédiés traditionnels tel que des instruments à aiguille, sont « virtualisés » (i.e. remplacés) par des écrans, notamment des écrans LCD, formant ensemble une surface de visualisation cohérente. Autrement, dit l'ensemble des écrans fournit une cohérence d'affichage et d'interactions entre écrans, un pilote étant propre à pointer avec le curseur de son organe de commande sur les différents écrans.

Une telle virtualisation d'équipement a pour conséquence une augmentation du nombre de formats affichables, les écrans permettant d'afficher les informations indispensables au pilotage du véhicule, comme celles relatives à la navigation, aux communications fournis par des systèmes embarqués obéissant à certains contraintes d'intégrité et de disponibilité tels que des systèmes avioniques lorsque le véhicule est un aéronef.

Les écrans permettent également de fournir des informations autres que celles indispensables au pilotage du véhicule, telles que des cartes de navigation, des panneaux de contrôle virtualisés, des flux vidéo de caméra externe, des manuels de pilotage, etc.

Le nombre de formats affichables est généralement largement supérieur à la surface d'affichage totale proposée par les écrans de la planche de bord tout écran, si bien que la tâche incombe au pilote de reconfigurer l'affichage de la planche de bord en fonction de ses besoins opérationnels ou de la mission attribuée au véhicule.

Une telle tâche est complexe à mettre en oeuvre mentalement de manière optimale car le nombre de combinaisons d'affichages possibles est démultiplié par le nombre de formats, le nombre d'écrans, et de configurations d'affichage au sein d'un même écran, et source d'insécurité notamment si le pilote supprime par mégarde l'affichage des informations indispensables au pilotage du véhicule.

Le but de l'invention est de proposer un mécanisme de saisie utilisateur (i.e. pilote) pour paramétrer l'affichage d'une planche de bord tout écran, permettant à l'utilisateur de définir directement différentes conditions de traitement de l'affichage tout en conservant une surface utile de restitution d'information optimale.

A cet effet, l'invention a pour objet un dispositif d'affichage électronique pour planche de bord tout écran d'un système de pilotage de véhicule, ladite planche de bord comprenant une pluralité d'écrans, au moins deux écrans de la pluralité d'écrans étant propres à afficher simultanément des flux vidéo distincts associés respectivement à des formats d'affichages distincts, le dispositif d'affichage comprenant pour chaque écran d'au moins une partie de la pluralité d'écrans, un outil de configuration d'affichage interactif, le dispositif étant configuré pour, pour chaque écran de ladite au moins une partie :
- afficher, l'outil de configuration dans au moins une zone prédéterminée dudit écran, l'outil de configuration comprenant une pluralité de symboles de saisie utilisateur, chaque symbole étant associé à une configuration d'affichage correspondant à la combinaison d'un format d'affichage, d'une taille de fenêtre d'affichage dudit format d'affichage par rapport à la taille dudit écran, et d'une localisation de ladite fenêtre d'affichage du format d'affichage au sein dudit écran,
- modifier la configuration d'affichage dudit écran en cas de sélection d'un symbole de saisie utilisateur distinct du symbole de saisie utilisateur correspondant à la configuration d'affichage courante dudit écran, le dispositif d'affichage étant configuré pour afficher en permanence et/ou temporairement l'outil de configuration d'affichage interactif sur le ou les flux vidéo en cours d'affichage sur ledit écran, et dans lequel :
- la surface de ladite au moins une zone prédéterminée (Z1 , Z2 , Z3 , ..., ZN ) est strictement inférieure à la moitié de la surface de chaque écran (E1 , E2 , E3 , ..., EN ) de la pluralité d'écrans, et
- la localisation de ladite au moins une zone prédéterminée (Z1 , Z2 , Z3 , ..., ZN ), sur ledit écran, est distincte de la localisation d'une zone dédiée à l'affichage des informations indispensables au pilotage du véhicule, la localisation de ladite au moins une zone prédéterminée dépendant de la configuration d'affichage courante dudit écran.

Ainsi avec le dispositif d'affichage électronique selon l'invention, le mécanisme de saisie utilisateur permet par la sélection d'un unique symbole de saisie utilisateur l'application directe d'une configuration d'affichage correspondant à un triplet de réglages simultanés à savoir un réglage portant sur le format d'affichage, un réglage portant sur la taille de fenêtre d'affichage du format d'affichage par rapport à la taille de l'écran considéré, et le réglage d'une localisation de la fenêtre d'affichage du format d'affichage au sein de l'écran, propre à restituer, le cas échéant une combinaison de formats.

Le dispositif d'affichage selon l'invention est alors particulièrement avantageux pour configurer ou encore reconfigurer localement l'affichage de chaque écran d'une planche de bord tout écran notamment en cas de nouvelle mission du véhicule ou encore de phase de navigation (e.g. départ ou décollage pour un aéronef, croisière, arrivée ou atterrissage pour un aéronef, etc.).

En effet, le dispositif d'affichage selon la présente invention aide concrètement l'utilisateur à effectuer une reconfiguration locale de l'affichage d'une planche de bord tout écran au moyen d'un processus d'interaction homme-machine guidé par la sélection de symbole(s) de saisie utilisateur au sein de l'outil de configuration associé localement à chaque écran, chaque symbole de saisie étant explicitement représentatif, pour tout utilisateur, de la configuration d'affichage (i.e. un triplet de réglages simultanés de l'affichage de l'écran considéré) qui lui est associée.

Il existe donc un lien de causalité fiable entre l'aide apportée à tout utilisateur et le dispositif d'affichage, en particulier la signalétique mise en oeuvre, par le dispositif d'affichage, au moyen d'outils de configuration associés chacun à un écran de la planche de bord tout écran et comprenant chacun les symboles de saisie utilisateur proposés ci-dessus.

Suivant d'autres aspects avantageux de l'invention, le dispositif d'affichage électronique comprend une ou plusieurs des caractéristiques suivantes, prises isolément ou suivant toutes les combinaisons techniquement possibles :
- pour afficher temporairement l'outil de configuration, le dispositif d'affichage est activable par :
   - pression mécanique sur un bouton physique dédié dudit écran ; et/ou
   - pression tactile ou pointage sur un bouton virtuel dudit écran ; et/ou
   - un geste tactile prédéterminé sur la surface dudit écran ;
- lorsque l'outil de configuration d'affichage interactif est configuré pour être affiché temporairement, le dispositif est configuré pour refermer l'outil de configuration automatiquement après activation d'un symbole de saisie utilisateur, et/ou après expiration d'un délai prédéterminé, et/ou après détection d'une saisie utilisateur en dehors de ladite au moins une zone prédéterminée d'affichage de l'outil de configuration ;
- le dispositif d'affichage est configuré pour rendre sélectionnable un symbole de saisie utilisateur de ladite pluralité de symboles de saisie utilisateur en fonction de la configuration d'affichage courante dudit écran et/ou en fonction de la position dudit écran au sein de ladite planche de bord et/ou en fonction de la configuration d'affichage courante d'au moins un autre écran de ladite pluralité d'écrans, ledit au moins un autre écran étant distinct dudit écran ;
- l'outil de configuration correspond à une liste ordonnée de l'ensemble des configuration d'affichage des formats affichables sur au moins un des écrans de ladite pluralité d'écrans, chaque ligne de la liste ordonnée étant associée à un format d'affichage dudit ensemble des formats d'affichage affichables et comprenant autant de symboles de saisie utilisateur que de configuration(s) d'affichage associée(s) audit format d'affichage de la ligne et affichable(s) au moins une fois sur ledit écran ;
- lorsque l'outil de configuration d'affichage interactif est configuré pour être affiché temporairement, l'ordre de l'ensemble des configurations d'affichage des formats d'affichage affichables de la liste ordonnée est invariable d'un écran de la pluralité d'écrans à l'autre ;
- le dispositif d'affichage est configuré pour afficher chaque symbole de saisie utilisateur selon quatre états distincts correspondant à :
- la configuration d'affichage courante,
- une configuration d'affichage affichable à partir de la configuration d'affichage courante,
- une configuration d'affichage au moins une fois affichable sur ledit écran mais non affichable à partir de la configuration d'affichage courante,
- une configuration d'affichage jamais affichable sur ledit écran.

L'invention a également pour objet un véhicule, tel qu'un aéronef, comprenant une planche de bord tout écran, le véhicule comprenant en outre un dispositif d'affichage tel que défini ci-dessus.
L'invention a également pour objet un procédé d'affichage pour planche de bord tout écran d'un véhicule mis en oeuvre par un dispositif d'affichage du véhicule, le dispositif étant destiné à fournir des flux vidéo à une pluralité d'écrans de visualisation de ladite planche de bord, au moins deux écrans de la pluralité d'écrans étant propres à afficher simultanément des flux vidéo distincts associés respectivement à des formats d'affichages distincts, le dispositif comprenant un outil de configuration d'affichage interactif, pour chaque écran de ladite au moins une partie, le procédé comprenant au moins :
- l'affichage de l'outil de configuration dans au moins une zone prédéterminée dudit écran, l'outil de configuration comprenant une pluralité de symboles de saisie utilisateur, chaque symbole étant associé à une configuration d'affichage correspondant à la combinaison d'un format d'affichage, d'une taille de fenêtre d'affichage dudit format d'affichage par rapport à la taille dudit écran, et d'une localisation de ladite fenêtre d'affichage du format d'affichage au sein dudit écran,
- la modification de la configuration d'affichage dudit écran en cas de sélection d'un symbole de saisie utilisateur distinct du symbole de saisie utilisateur correspondant à la configuration d'affichage courante dudit écran.

Le dispositif d'affichage est configuré pour afficher en permanence et/ou temporairement l'outil de configuration d'affichage interactif sur le ou les flux vidéo en cours d'affichage sur ledit écran, et dans lequel :- la surface de ladite au moins une zone prédéterminée (Z1 , Z2 , Z3 , ..., ZN ) est strictement inférieure à la moitié de la surface de chaque écran (E1 , E2 , E3 , ..., EN ) de la pluralité d'écrans, et- la localisation de ladite au moins une zone prédéterminée (Z1 , Z2 , Z3 , ..., ZN ), sur ledit écran, est distincte de la localisation d'une zone dédiée à l'affichage des informations indispensables au pilotage du véhicule, la localisation de ladite au moins une zone prédéterminée dépendant de la configuration d'affichage courante dudit écran.

L'invention a également pour objet un programme d'ordinateur comportant des instructions logicielles qui, lorsqu'elles sont exécutées par un ordinateur, mettent en oeuvre un procédé d'affichage tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique de l'affichage, pour chaque écran d'une planche de bord tout écran, d'un outil de configuration interactif d'un dispositif d'affichage selon l'invention ;
[Fig 2] la figure 2 est un exemple d'outils de configuration affichable en permanence et/ou temporairement sur un écran de la planche de bord tout écran, et
[Fig 3] la figure 3 est un organigramme d'un procédé d'affichage selon l'invention.

Dans la suite de la description, l'expression « sensiblement égal(e) à » désigne une relation d'égalité à plus ou moins 10%, de préférence à plus ou moins 5%.

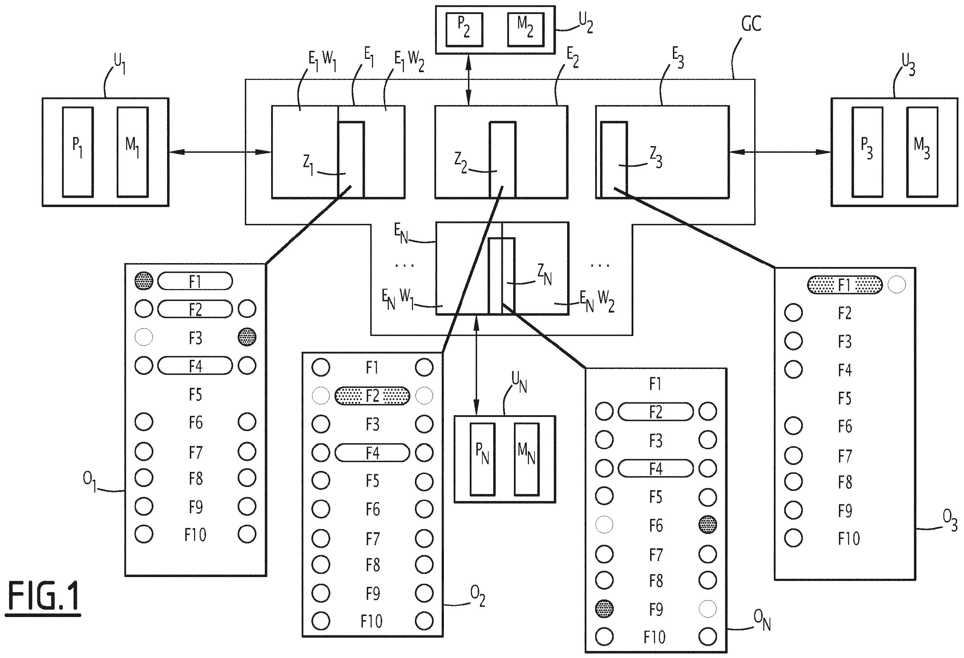

Sur la figure 1, une planche de bord tout écran GC comprend une pluralité de N écrans, notamment tactiles, N étant un entier supérieur ou égal à un. Selon l'exemple de la figure 1, quatre écrans à savoir les écrans E₁, E₂, E₃ et E_{N} de la pluralité de N écrans sont représentés.

Selon l'exemple de la figure 1, chaque écran E est piloté par une unité de traitement U qui lui est propre, une unité de traitement comprenant au moins un processeur et une mémoire. Autrement dit, à l'écran E₁ est associé l'unité de traitement U₁ comprenant au moins un processeur P₁ et une mémoire M₁, à l'écran E₂ est associé l'unité de traitement U₂ comprenant au moins un processeur P₂ et une mémoire M₂, à l'écran E₃ est associé l'unité de traitement U₃ comprenant au moins un processeur P₃ et une mémoire M₃, ..., à l'écran E_{N} est associé l'unité de traitement U_{N} comprenant au moins un processeur P_{N} et une mémoire M_{N}.

La combinaison des N unités de traitement U₁, U₂, U₃, ..., U_{N} forme le dispositif d'affichage selon la présente invention configuré pour adapter localement l'affichage d'un écran et ce indépendamment d'un écran à un autre.

Selon un aspect non représenté, seuls P écrans parmi N sont associés à une unité de traitement permettant la reconfiguration de leur propre affichage, P étant strictement inférieur à N, le format des N-P autres écrans de la planche de bord tout écran n'étant pas reconfigurables et par conséquent permanents notamment pour des raisons de sécurité.

Selon la présente invention, le dispositif d'affichage comprend, respectivement pour chaque écran de (tout ou partie de) la pluralité d'écrans E₁, E₂, E₃, ..., E_{N}, un outil de configuration d'affichage interactif O₁, O₂, O₃, ..., O_{N}.

Selon un aspect particulier, le dispositif d'affichage est activable, quelles que soient les conditions de vol, par action manuelle de l'utilisateur, par exemple par: pression mécanique sur un bouton physique (ou curseur) dédié et/ou existant de chaque écran de la pluralité d'écrans de la planche de bord tout écran; et/ou par pression tactile ou pointage sur un bouton virtuel de chaque écran, et/ou par un geste tactile prédéterminé sur la surface de chaque écran.

Par geste tactile prédéterminé on entend par exemple une double ou triple pression d'un doigt, un glissé continu de doigt, un écartement de deux doigts sur la surface tactile de l'écran, etc.

Dans l'exemple de la figure 1, l'outil de configuration d'affichage interactif O₁ est réalisé sous forme d'un logiciel, ou d'une brique logicielle exécutable par le processeur P₁ de l'unité de traitement U₁ associée à l'écran E₁. La mémoire M₁ est alors apte à stocker un tel logiciel d'affichage interactif O₁ pour permettre localement la configuration de l'affichage de l'écran E₁. Le processeur P₁ est alors apte à exécuter un tel logiciel d'affichage interactif O₁.

De même, l'outil de configuration d'affichage interactif O₂ est réalisé sous forme d'un logiciel, ou d'une brique logicielle exécutable par le processeur P₂ de l'unité de traitement U₂ associée à l'écran E₂. La mémoire M₂ est alors apte à stocker un tel logiciel d'affichage interactif O₂ pour permettre localement la configuration de l'affichage de l'écran E₂. Le processeur P₂ est alors apte à exécuter un tel logiciel d'affichage interactif O₂.

L'outil de configuration d'affichage interactif O₃ est également réalisé sous forme d'un logiciel, ou d'une brique logicielle exécutable par le processeur P₃ de l'unité de traitement U₃ associée à l'écran E₃. La mémoire M₃ est alors apte à stocker un tel logiciel d'affichage interactif O₃ pour permettre localement la configuration de l'affichage de l'écran E₃. Le processeur P₃ est alors apte à exécuter un tel logiciel d'affichage interactif O₃.

Et ainsi de suite jusqu'à l'outil de configuration d'affichage interactif O_{N} également réalisé sous forme d'un logiciel, ou d'une brique logicielle exécutable par le processeur P_{N} de l'unité de traitement U_{N} associée à l'écran E_{N}. La mémoire M_{N} est alors apte à stocker un tel logiciel d'affichage interactif O_{N} pour permettre localement la configuration de l'affichage de l'écran E_{N}. Le processeur P_{N} est alors apte à exécuter un tel logiciel d'affichage interactif O_{N}.

En variante, les outils de configuration d'affichage interactif O₁, O₂, O₃, ..., O_{N} sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Spécifie integrated Circuit*)*.*

Lorsqu'une partie du dispositif d'affichage est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Selon l'exemple de la figure 1, le dispositif d'affichage selon la présente invention est configuré pour, pour chaque écran :
- afficher, l'outil de configuration O dans au moins une zone prédéterminée Z de l'écran E considéré, l'outil de configuration O comprenant une pluralité de symboles de saisie utilisateur, chaque symbole étant associé à une configuration d'affichage correspondant à la combinaison d'un format d'affichage, d'une taille de fenêtre d'affichage du format d'affichage par rapport à la taille de l'écran E considéré, et d'une localisation de la fenêtre d'affichage du format d'affichage au sein de l'écran E considéré,
- modifier la configuration d'affichage de l'écran E considéré en cas de sélection d'un symbole de saisie utilisateur distinct du symbole de saisie utilisateur correspondant à la configuration d'affichage courante de l'écran E considéré.

Sur l'exemple de la figure 1, le dispositif d'affichage, via l'unité U₁ est propre à afficher l'outil de configuration O₁ dans la zone prédéterminée Z₁ de la fenêtre E₁W₂ à droite de l'écran E₁.

Selon un aspect particulier, l'outil de configuration O₁ correspond à une liste ordonnée de l'ensemble des configuration d'affichage des formats F1, F2, F3 ... F10 affichables sur au moins un des écrans de la pluralité d'écrans E₁, E₂, E₃, ..., E_{N}.

A titre d'exemple non limitatif, le premier format F1 correspond au format dédié à l'affichage des paramètres de vol principaux PFD (de l'anglais *Primary Flight Display*)*,* le format F2 est le format dédié à l'affichage des paramètres de navigation ND (de l'anglais *Navigation Display*) tel que le cap, le format F3 est dédié à l'affichage des paramètres associés à la mission du véhicule telle que la mission de recherche et de sauvetage, une mission pétrole et gaz, etc., le format F4 est dédié à l'affichage de panneaux de contrôles virtualisés permettant par exemple une représentation tridimensionnelle du relief, un schéma aéronautique ou encore une représentation d'un aéroport, le format F5 est dédié au système d'information de vol FMS (de l'anglais *Flight Management System*)*,* le format F6 est dédié à la configuration des moyens de communication par exemple haute fréquence HF et très haute fréquence VHF, le format F7 est dédié au contrôle des états des éléments du système de pilotage, le format F8 est dédié à l'affichage des procédures de pilotage, le format F9 est dédié à l'affichage des flux vidéo de caméra externe, le format F10 est dédié à l'affichage de cartographie(s), etc.

Toute autre association de libellé de format F1, F2, F3 ... F10 aux exemples de formats précités est envisageable, par exemple le format libellé F7 est dédié à l'affichage de cartographie(s) tandis que le format libellé F10 est dédié au contrôle des états des éléments du système de pilotage.

Plus précisément selon cet aspect particulier, chaque ligne de la liste ordonnée est associée à un format d'affichage de l'ensemble des formats d'affichage affichables et comprend autant de symboles de saisie utilisateur que de configuration(s) d'affichage associée(s) au format d'affichage de la ligne et affichable(s) au moins une fois sur l'écran considéré.

En particulier, le dispositif d'affichage est configuré pour afficher chaque symbole de saisie utilisateur selon quatre états distincts correspondant à la configuration d'affichage courante, une configuration d'affichage affichable à partir de la configuration d'affichage courante, une configuration d'affichage au moins une fois affichable sur ledit écran mais non affichable à partir de la configuration d'affichage courante, une configuration d'affichage jamais affichable sur ledit écran.

Ces quatre états sont prédéterminés, connus de l'utilisateur et explicites (i.e. chacun associé de manière évidente pour tout utilisateur à une configuration d'affichage qui lui est propre).

Selon l'exemple de la figure 1, un symbole de saisie utilisateur est identifiable par un utilisateur par la présence d'un contour ici rond ou ovale, l'épaisseur du contour présentant deux valeurs distinctes la plus élevée indiquant que le symbole est sélectionnable par l'utilisateur et la moins élevée indiquant que le symbole n'est pas sélectionnable à partir de la configuration d'affichage en cours de restitution.

L'absence de symbole de saisie utilisateur (i.e. de contour) indique à l'utilisateur que la configuration d'affichage associée n'est jamais affichable sur l'écran considéré.

Le remplissage du contour d'un symbole de saisie utilisateur par une texture, des pointillés selon l'exemple de la figure 1, ou encore une couleur prédéterminée, par exemple un remplissage blanc lorsque le fond de l'outil de configuration est noir indique que la configuration d'affichage associé à un tel symbole de saisie utilisateur est la configuration d'affichage courante.

Ainsi, en considérant notamment l'outil de configuration O₁ associé à l'écran E₁, la configuration d'affichage courante est donc représentée par un symbole de saisie utilisateur en pointillés et correspond notamment à l'affichage du format F1 dans la fenêtre E₁W₁ à gauche de l'écran E₁ et à l'affichage du format F3 dans la fenêtre E₁W₂ de ce même écran E₁. La taille de chacune des fenêtres E₁W₁ et E₁W₂ étant égale à la taille du demi-écran E₁.

Le format F1 est également affichable en plein écran, le symbole central au contour ovale de la ligne F1 étant sélectionnable. En revanche, dans l'écran E₁, le symbole permettant la sélection de la configuration d'affichage correspondant à la combinaison du format F1, de la taille de fenêtre correspondant à un demi écran, et de la localisation à droite de cette fenêtre est absent dans l'outil de configuration O₁ rendant impossible une telle sélection d'une configuration d'affichage correspondant à un triplet de réglages simultanés à savoir un réglage portant sur le format d'affichage, un réglage portant sur la taille de fenêtre d'affichage du format d'affichage par rapport à la taille de l'écran considéré, et le réglage d'une localisation de la fenêtre d'affichage du format d'affichage au sein de l'écran.

En ce qui concerne le format F2, de même que le format F4, trois symboles de saisie utilisateur sont sélectionnables pour modifier la configuration d'affichage courante, à savoir un affichage du format F2 dans la fenêtre E₁W₁ à gauche de l'écran E₁, un affichage du format F2 en plein écran, et un affichage du format F2 dans la fenêtre E₁W₂ à droite de l'écran E₁.

Comme indiqué précédemment, l'affichage du format F3 dans la fenêtre droite E₁W₂ de ce même écran E₁ correspond à la configuration d'affichage courante, le format F3 n'est jamais affichable en plein écran selon l'exemple de la figure 1 et l'affichage du format F3 dans la fenêtre gauche E₁W₁ sur l'écran E₁ est possible mais non affichable à partir de la configuration d'affichage courante, le symbole rond utilisateur associé à l'affichage du format F3 dans la fenêtre gauche E₁W₁ présentant un contour plus fin que les autres symboles utilisateurs sélectionnables.

Aucune configuration d'affichage du format F5 n'est affichable (i.e. accessible) sur l'écran E₁ car aucun symbole de saisie utilisateur représenté sur la figure 1 par un contour rond ou ovale n'est présent sur la ligne de l'outil de configuration O₁.

En ce qui concerne les formats F6 à F10, deux symboles de saisie utilisateur sont sélectionnables pour modifier la configuration d'affichage courante, à savoir un affichage d'un de ces formats dans la fenêtre E₁W₁ à gauche de l'écran E₁ et un affichage du format F2 dans la fenêtre E₁W₂ à droite de l'écran E₁.

De manière similaire, le dispositif d'affichage, via l'unité U₂ est propre à afficher l'outil de configuration O₂ dans la zone prédéterminée Z₂ de l'écran E₂.

Pour l'écran E₂, la configuration d'affichage courante est, selon l'exemple de la figure 1, représentée par un symbole de saisie utilisateur en pointillés et correspond notamment à l'affichage du format F2 en plein écran. L'affichage du format F2 dans une fenêtre gauche (non représentée) ou une fenêtre droite (non représentée) de l'écran E₂ est possible mais non affichable à partir de la configuration d'affichage courante, les symboles ronds utilisateurs associés à l'affichage du format F2 dans une fenêtre gauche ou une fenêtre droite de l'écran E₂ présentant un contour plus fin que les autres symboles utilisateurs sélectionnables.

En ce qui concerne les formats F1, F3 et F5 à F10, deux symboles de saisie utilisateur sont sélectionnables pour modifier la configuration d'affichage courante, à savoir un affichage d'un de ces formats dans une fenêtre à gauche de l'écran E₂ et un affichage du d'un de ces formats dans une fenêtre à droite de l'écran E₂.

En ce qui concerne le format F4, trois symboles de saisie utilisateur sont sélectionnables pour modifier la configuration d'affichage courante, à savoir un affichage du format F4 dans une fenêtre gauche de l'écran E₂, un affichage du format F4 en plein écran, et un affichage du format F4 dans une fenêtre droite de l'écran E₂.

De manière similaire, le dispositif d'affichage, via l'unité U₃ est propre à afficher l'outil de configuration O₃ dans une zone prédéterminée Z₃ de l'écran E₃.

Pour l'écran E₃, la configuration d'affichage courante est, selon l'exemple de la figure 1, représentée par un symbole de saisie utilisateur en pointillés et correspond notamment à l'affichage du format F1 en plein écran.

Sur l'écran E₃, en plein écran seul l'affichage du format F1 est possible. Pour modifier la configuration d'affichage courante, l'utilisateur peut uniquement sélectionner l'un des symboles de saisie utilisateur associé à l'un des formats F2 à F4 ou à l'un des formats F6 à F10 associé à une configuration d'affichage de ce format dans une fenêtre localisée à gauche et de taille inférieure à la taille de l'écran E₃.

Aucune configuration d'affichage du format F5 n'est affichable (i.e. accessible) sur l'écran E₃ car aucun symbole de saisie utilisateur représenté sur la figure 1 par un contour rond ou ovale n'est présent sur la ligne de l'outil de configuration O₃.

La configuration d'affichage du format F1 dans une fenêtre droite de taille prédéterminée sur l'écran E₃ est possible mais non affichable à partir de la configuration d'affichage courante, le symbole rond utilisateur associé à l'affichage du format F1 dans une fenêtre droite présentant un contour plus fin que les autres symboles utilisateurs sélectionnables. Autrement dit, la configuration d'affichage du format F1 dans une fenêtre droite de taille prédéterminée sur l'écran E₃ ne peut succéder directement à la configuration d'affichage courante.

Il est à noter que sur la fenêtre droite de l'écran E₃ au vu des symboles de saisie utilisateur sélectionnables de l'outil de configuration O₃, seul le format F1 est restituable sur la fenêtre droite de cet écran E₃ soit via une configuration plein écran soit via une configuration fenêtre de taille égale à un demi écran localisée à droite.

De manière similaire, le dispositif d'affichage, via l'unité U_{N} est propre à afficher l'outil de configuration O_{N} dans une zone prédéterminée Z_{N} de l'écran E_{N}.

Pour l'écran E_{N}, la configuration d'affichage courante correspond notamment à l'affichage du format F9 dans la fenêtre E_{N}W₁ à gauche de l'écran E_{N} et à l'affichage du format F6 dans la fenêtre E_{N}W₂ de ce même écran E_{N}. La taille de chacune des fenêtres E_{N}W₁ et E_{N}W₂ étant égale à la taille du demi-écran E_{N}.

Aucune configuration d'affichage du format F1 n'est affichable (i.e. accessible) sur l'écran E_{N} car aucun symbole de saisie utilisateur représenté sur la figure 1 par un contour rond ou ovale n'est présent sur la ligne de l'outil de configuration O_{N}.

En ce qui concerne le format F2, de même que le format F4, trois symboles de saisie utilisateur sont sélectionnables pour modifier la configuration d'affichage courante, à savoir un affichage du format F2 dans la fenêtre E_{N}W₁ à gauche de l'écran E_{N}, un affichage du format F2 en plein écran, et un affichage du format F2 dans la fenêtre E_{N}W₂ à droite de l'écran E₁.

En ce qui concerne les formats F3, F5, F7, F8 et F10, deux symboles de saisie utilisateur sont sélectionnables pour modifier la configuration d'affichage courante, à savoir un affichage d'un de ces formats dans une fenêtre à gauche de l'écran E_{N} et un affichage d'un de ces formats dans une fenêtre à droite de l'écran E_{N}.

Comme indiqué précédemment, l'affichage du format F6 dans la fenêtre droite E_{N}W₂ de ce même écran E_{N} correspond à la configuration d'affichage courante, le format F6 n'est jamais affichable en plein écran selon l'exemple de la figure 1 et l'affichage du format F6 dans la fenêtre gauche E_{N}W₁ sur l'écran E₁ est possible mais non affichable à partir de la configuration d'affichage courante, le symbole rond utilisateur associé à l'affichage du format F6 dans la fenêtre gauche E_{N}W₁ présentant un contour plus fin que les autres symboles utilisateurs sélectionnables.

De même, l'affichage du format F9 dans la fenêtre gauche E_{N}W₁ de ce même écran E_{N} correspond à la configuration d'affichage courante, le format F9 n'est jamais affichable en plein écran selon l'exemple de la figure 1 et l'affichage du format F9 dans la fenêtre droite E_{N}W₂ sur l'écran E₁ est possible mais non affichable à partir de la configuration d'affichage courante, le symbole rond utilisateur associé à l'affichage du format F9 dans la fenêtre gauche E_{N}W₁ présentant un contour plus fin que les autres symboles utilisateurs sélectionnables.

Selon un aspect particulier des contraintes normatives ou techniques peuvent imposer ou empêcher certaines configurations d'affichage, le dispositif d'affichage selon l'invention est configuré pour rendre automatiquement (i.e. sans intervention humaine) sélectionnable (et inversement non sélectionnable) un symbole de saisie utilisateur de la pluralité de symboles de saisie utilisateur d'un outil de configuration en fonction de la configuration d'affichage courante de l'écran considéré et/ou en fonction de la position de l'écran au sein de la planche de bord GC et/ou en fonction de la configuration d'affichage courante d'au moins un autre écran de la pluralité d'écrans.

En d'autres termes en relation avec la figure 1, une cohérence entre les différents outils de configuration O₁, O₂, O₃, ...O_{N} locaux associés chacun respectivement à un écran distinct est optionnellement mise en oeuvre par le dispositif d'affichage selon la présente invention.

Pour ce faire, les unités de traitement U₁, U₂, U₃, ... U_{N} du dispositif d'affichage selon la présente invention sont par exemple interconnectées par des liaisons sans fil ou filaires non représentées de sorte à se communiquer leur configuration d'affichage courante respective afin que le dispositif d'affichage, par l'intermédiaire d'un processeur dédié supplémentaire ou par l'intermédiaire de l'un des processeurs P₁, P₂, P₃, ..., P_{N} des unités de traitement, détermine en quasi temps réel, voire en temps réel s'il y a par exemple toujours au moins un écran, de la pluralité d'écrans de la planche de bord tout écran GC, dont la configuration d'affichage correspond au format F1 dédié à l'affichage des paramètres de vol principaux PFD.

Selon l'exemple de la figure 1, les outils de configuration interactif O₁, O₂, O₃, ...O_{N} sont configurés pour être affichés temporairement et indépendamment les uns des autres sur le ou les flux vidéo en cours de restitution sur chaque écran auquel chaque outil de configuration est associé.

En particulier, lorsque l'outil de configuration d'affichage interactif est configuré pour être affiché temporairement, l'ordre de l'ensemble des configurations d'affichage des formats d'affichage affichables de la liste ordonnée est invariable d'un écran de la pluralité d'écrans à l'autre. Autrement dit, chaque outil de configuration interactif O₁, O₂, O₃, ...O_{N} comprend une première ligne associée au même format F1 d'un outil de configuration à l'autre, une deuxième ligne associée au même format F2 d'un outil de configuration à l'autre, une troisième ligne associée au même format F3 d'un outil de configuration à l'autre, etc.

Une telle invariabilité d'affichage au sein d'un outil de configuration interactif d'un écran à un autre facilite et accélère la recherche du format d'affichage souhaité par l'utilisateur lorsqu'il cherche à modifier la configuration d'affichage courante, et réduit le risque d'erreur de saisie de son choix.

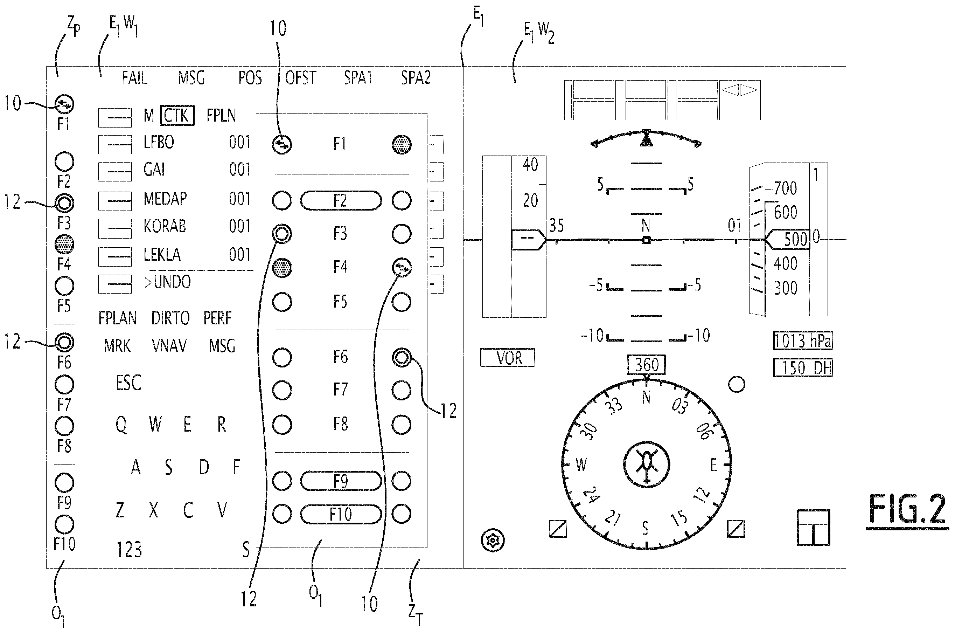

En relation avec la figure 2, le dispositif d'affichage est configuré pour afficher en permanence et/ou temporairement l'outil de configuration d'affichage interactif sur le ou les flux vidéo en cours d'affichage sur un écran considéré.

En d'autres termes, sur un ou plusieurs des écrans E₁, E₂, E₃, ..., E_{N} de la pluralité d'écran de la planche de bord GC de la figure 1, un outil de configuration d'affichage interactif selon l'invention affichable temporairement dans une zone prédéterminée Z_{T} est propre à être complété ou remplacé par un outil de configuration d'affichage interactif affichable en permanence dans au moins une zone prédéterminée Z_{P}.

Selon l'exemple de la figure 2, un exemple d'outil de configuration d'affichage interactif O₁ associé à l'écran E₁ est affiché complètement (i.e. exhaustivement) dans la zone prédéterminée Z_{T} d'affichage temporaire et en complément est affiché de manière réduite (i.e. de manière raccourcie ou encore limitée par rapport à l'affichage temporaire dans la zone prédéterminée Z_{T}) en permanence dans la zone prédéterminée Z_{P}.

Selon un aspect particulier de l'invention, la surface de la zone prédéterminée Z_{T} d'affichage temporaire, comme celle de la zone prédéterminée Z_{P} d'affichage permanent, est strictement inférieure à la moitié de la surface de l'écran E₁. Selon la présente invention, il en est de même pour tout outil de configuration, autrement dit la surface de la zone prédéterminée d'affichage d'un outil de configuration est toujours strictement inférieure à la moitié de la surface de chaque écran de la pluralité d'écrans de la planche de bord tout écran.

De plus, la localisation de la zone prédéterminée Z_{T} d'affichage temporaire, comme celle de la zone prédéterminée Z_{P} d'affichage permanent, sur l'écran E₁, est distincte de la localisation d'une zone dédiée à l'affichage des informations indispensables au pilotage du véhicule, la localisation de la zone prédéterminée Z_{T} d'affichage temporaire, comme celle de la zone prédéterminée Z_{P} d'affichage permanent dépendant de la configuration d'affichage courante de l'écran E₁.

Autrement dit, la localisation et la taille de la zone prédéterminée temporaire Z_{T} d'affichage (i.e. d'apparition/disparition pour un affichage temporaire) est optimisée de sorte à limiter le masquage des formats, notamment avioniques en cours de restitution.

Selon une variante non représentée, l'outil de configuration O₁ est affiché en surimpression permettant ainsi de voir le flux vidéo restitué en dessous.

Sur la figure 2, l'outil de configuration O₁ lorsqu'il est affiché temporairement est contenu dans la surface optimisée de la zone temporaire d'affichage Z_{T} et s'affiche pardessus les formats avioniques en cours de restitution. Selon l'exemple de la figure 2, la configuration d'affichage courante, selon les symboles de saisie utilisateur présentant une texture en pointillés, correspond au format F1 restitué dans la fenêtre droite EᵢW₂ de l'écran E₁ et au format F4 restitué dans la fenêtre gauche E₁W₁ de l'écran E₁.

La position (i.e. localisation au sein de l'écran E₁) de la zone temporaire d'affichage Z_{T} est adaptée de sorte qu'elle ne masque pas des paramètres primaires de pilotage. Ainsi sur la figure 2, la zone temporaire d'affichage Z_{T} est localisée au sein de la fenêtre gauche E₁W₁ de l'écran E₁ alors que les paramètres primaires de pilotage associés au format F1 sont restitués et toujours visibles dans la fenêtre droite E₁W₂ de l'écran E₁.

Ainsi, même si l'outil de configuration O₁ est affiché temporairement dans la zone temporaire d'affichage Z_{T} (i.e. quelques secondes), il est possible pour le pilote de l'aéronef de continuer à surveiller en continu les paramètres essentiels à sa tâche à savoir le pilotage.

De même, selon l'outil de configuration O₁ de la figure 1 où la configuration d'affichage courante, détectable par la texture en pointillé des symboles de saisie utilisateur, correspond à l'affichage du format F1 dans la fenêtre gauche E₁W₁, la zone temporaire d'affichage Z_{T} est cette fois localisée au sein de la fenêtre droite E₁W₂ de l'écran E₁ pour ne pas masquer les paramètres primaires de pilotage associés au format F1 restitués et en conséquence toujours visible dans la fenêtre gauche E₁W₁ de l'écran E₁

De plus, comparé à l'outil de configuration O₁ de la figure 1 où l'affichage du format F1 dans la fenêtre droite E₁W₂ de l'écran E₁ était impossible, l'outil de configuration O₁ de la figure 2 comprend un symbole de saisie utilisateur 10 comprenant un premier élément signalétique supplémentaire, à savoir deux flèches en sens inverse l'une de l'autre, permettant d'afficher, après sélection par l'utilisateur, à la place de la configuration d'affichage courante correspondant au format F1 au sein de la fenêtre droite E₁W₂ de l'écran E₁ et au format F4 au sein de la fenêtre gauche E₁W₁, le format F1 au sein de la fenêtre gauche E₁W₁ de l'écran E₁ et le format F4 au sein de la fenêtre droite E₁W₂ de l'écran E₁.

Par ailleurs, l'outil de configuration O₁ de la figure 2 comprend un symbole de saisie utilisateur 12 comprenant un deuxième élément signalétique supplémentaire, à savoir, par exemple, deux contours concentriques (ici ronds mais propres à être ovales également) permettant d'afficher, après sélection par l'utilisateur, directement la configuration d'affichage précédent la configuration d'affichage courante, la configuration d'affichage précédente correspondant à l'affichage du format F3 au sein de la fenêtre gauche E₁W₁ de l'écran E₁ et l'affichage du format F6 au sein de la fenêtre droite E₁W₂ de l'écran E₁.

A titre d'alternative au symbole de saisie 12 comprenant un deuxième élément signalétique supplémentaire, un symbole de saisie dédié avec une mention explicite telle que « AVANT » ou « BACK » est propre à être ajouté au sein d'un outil de configuration selon la présente invention.

Comme illustré par la figure 2, l'affichage temporaire propre à être mis en oeuvre par le dispositif d'affichage selon la présente invention est propre à être complété par un affichage permanent dans la zone prédéterminée Z_{P} d'affichage permanent.

Une telle zone prédéterminée Z_{P} d'affichage permanent correspond par exemple à un bandeau, dont la largeur permet l'affichage d'un seul symbole de saisie utilisateur par format, c'est pourquoi on parle d'affichage permanent raccourci ou réduit par rapport à l'affichage temporaire complet, notamment avec trois symboles de saisie utilisateur par format, du même outil de configuration O₁.

Un tel affichage raccourci permanent permet de réduire l'empreinte graphique (i.e. la taille) de l'affichage permanent de l'outil de configuration d'affichage afin d'optimiser la taille de la surface restante de l'écran considéré dédiée à l'affichage du ou des formats avionique à restituer sur cet écran, tout en offrant à l'utilisateur la possibilité de visualiser en continu, avec un accès immédiat, le ou les formats en cours de restitution à savoir, sur la figure 2, les formats F4 et F1 dont la fenêtre de restitution est interchangeable tel qu'indiqué par le symbole de saisie utilisateur 10, et la configuration d'affichage précédente à savoir les formats F3 et F6 tel qu'indiqué par le symbole de saisie utilisateur 12.

Un tel bandeau est par exemple localisé de manière adjacente à l'un ou à plusieurs des côtés d'écran et à l'intérieur de l'écran considéré.

Selon l'exemple de la figure 2, l'ordre de l'ensemble des configurations d'affichage des formats d'affichage affichables de l'outil de configuration O₁ affiché dans le bandeau permanent est identique à celui de l'outil de configuration O₁ affiché temporairement.

Selon un autre exemple, non représenté, le bandeau permanent est propre à restituer uniquement un sous-ensemble prédéterminé des configurations d'affichages disponibles dans l'outil de configuration O₁ affiché temporairement en superposition sur l'écran, un tel sous-ensemble de bandeau permanent étant propre à différer d'un écran à l'autre, de même que l'ordre des configurations d'affichage d'un tel sous-ensemble de bandeau permanent. A partir d'un tel bandeau permanent, l'affichage temporaire de l'outil de configuration O₁ dans la zone temporaire d'affichage Z_{T} est par exemple activé par pression tactile dans le bandeau à savoir la zone prédéterminée Z_{P} d'affichage permanent.

Selon un autre exemple, non représenté, un double affichage de bandeaux permanents (i.e. à la fois à gauche et à droite de l'écran considéré) est mis en oeuvre.

Selon un aspect particulier, lorsque l'outil de configuration d'affichage interactif est configuré pour être affiché temporairement, le dispositif d'affichage est configuré pour refermer automatiquement, l'outil de configuration O1 affiché dans la zone temporaire d'affichage Z_{T}, après activation d'un symbole de saisie utilisateur (l'activation valant sélection d'une nouvelle configuration d'affichage à appliquer), et/ou après expiration d'un délai prédéterminé, et/ou après détection d'une saisie utilisateur en dehors de la zone prédéterminée d'affichage Z_{T} de l'outil de configuration (par exemple en cas de saisie utilisateur sur un autre écran que l'écran E₁ ou par nouvelle pression mécanique sur le bouton dédié de l'écran qui a activé l'affichage de l'outil de configuration).

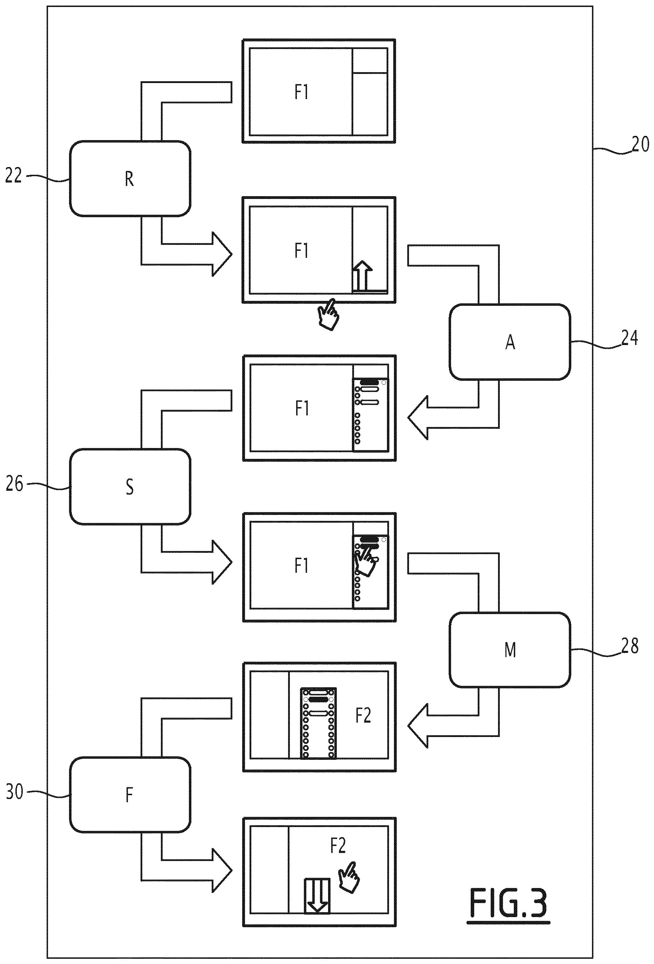

Un exemple non limitatif de fonctionnement du dispositif d'affichage selon l'invention va désormais être expliqué à l'aide de la figure 3 représentant un exemple d'organigramme d'un procédé d'affichage 20 selon l'invention.

Lors d'une première étape 22 d'un tel procédé d'affichage 20, le dispositif d'affichage est activé par exemple par réception R d'une pression mécanique manuelle sur un bouton dédié d'un des écrans de la planche de bord tout écran. Selon d'autres exemples, une telle activation du dispositif d'affichage est opérée via la pression tactile ou le pointage d'un bouton virtuel de l'écran considéré ou la saisie d'un geste tactile prédéterminé sur la surface dudit écran.

Lors d'une étape suivante 24, le dispositif d'affichage procède à l'affichage A de l'outil de configuration localement sur cet écran.

Lors d'une étape suivante 26, le dispositif d'affichage reçoit la saisie S de la configuration d'affichage sélectionnée par l'utilisateur par pression du symbole de saisie utilisateur désiré.

Lors d'une étape suivante 28, le dispositif d'affichage met en oeuvre la modification M de la configuration d'affichage courante conformément à la configuration d'affichage sélectionnée précédemment par l'utilisateur, et ce en cas de sélection d'un symbole de saisie utilisateur distinct du symbole de saisie utilisateur correspondant à la configuration d'affichage courante. Autrement dit, le format restitué est différent avant et après l'étape 28.

Lors d'une étape finale 30, le dispositif d'affichage referme F l'outil de configuration. Une telle fermeture est mise en oeuvre soit automatiquement après expiration d'une durée prédéterminée, soit manuellement par pression en dehors de l'outil de configuration, soit par une nouvelle pression sur le bouton mécanique ou virtuel utilisé pour ouvrir l'outil de configuration.

On conçoit ainsi que le dispositif d'affichage selon la présente invention permet au pilote d'adapter de façon efficace, intuitive et en limitant le risque d'erreurs la configuration d'affichage de son cockpit en fonction de la tâche / mission qu'il doit réaliser.

Une telle efficacité est notamment obtenue via un outil de configuration associé à chaque écran de la planche de bord tout écran du cockpit et affichable localement sur l'écran qui lui est propre, chaque outil de configuration comprenant un ensemble de symboles de saisie utilisateur explicites pour que le pilote sélectionne en les utilisant le la configuration d'affichage souhaitée.

Par ailleurs, le dispositif d'affichage selon la présente invention est propre à fournir une cohérence d'affichage d'outils de configuration sur l'ensemble des écrans, et à optimiser la taille et la position de chaque outil de configuration pour limiter localement sur chaque écran le masquage des formats avioniques en cours de restitution, ce qui permet au pilote de maintenir son attention sur les paramètres essentiels des formats affichés le temps de la tâche de reconfiguration d'affichage.

De plus, selon un aspect particulier, afin de faciliter l'utilisation par le pilote et l'efficacité de la tâche de reconfiguration, l'ordre des formats d'affichage de l'outil de configuration affiché temporairement est le même sur l'ensemble des écrans du cockpit. Néanmoins, des contraintes normatives ou techniques peuvent imposer ou empêcher certaines configurations d'affichage. Afin que le pilote ne soit pas dans l'obligation de connaître ces contraintes pour comprendre le comportement du système (ce qui aurait pour conséquence de complexifier sa tâche, donc par conséquent potentiellement accroître sa charge de travail, voire dans certaines situations dégrader la sécurité de l'opération s'il faut agir de façon urgente), l'outil de configuration fait apparaître de façon explicite la configuration d'affichage courante sur l'écran associé à l'outil de configuration, la ou les configuration(s) d'affichage affichable(s) à partir de la configuration d'affichage courante, la ou les configuration(s) d'affichage au moins une fois affichable(s) sur l'écran mais non affichable à partir de la configuration d'affichage courante, la ou les configuration(s) d'affichage jamais affichable(s) sur l'écran considéré.

## Revendications

1. Dispositif d'affichage électronique pour planche de bord tout écran (GC) d'un système de pilotage de véhicule, ladite planche de bord tout écran (GC) comprenant une pluralité d'écrans (E₁, E₂, E₃, ..., E_{N}), au moins deux écrans de la pluralité d'écrans étant propres à afficher simultanément des flux vidéo distincts associés respectivement à des formats d'affichages distincts, le dispositif d'affichage comprenant pour chaque écran d'au moins une partie de la pluralité d'écrans, un outil (O₁, O₂, O₃, ..., O_{N}) de configuration d'affichage interactif, le dispositif étant configuré pour, pour chaque écran (E₁, E₂, E₃, ..., E_{N}) de ladite au moins une partie :
- afficher, l'outil de configuration (O₁, O₂, O₃, ..., O_{N}) dans au moins une zone prédéterminée (Z₁, Z₂, Z₃, ..., Z_{N}) dudit écran, **caractérisé en ce que** l'outil de configuration comprend une pluralité de symboles de saisie utilisateur, chaque symbole étant associé à une configuration d'affichage correspondant à la combinaison d'un format d'affichage (F1, F2, F3, ... F10), d'une taille de fenêtre (E₁W₁, E₁W₂, E_{N}W₁, E_{N}W₂) d'affichage dudit format d'affichage par rapport à la taille dudit écran, et d'une localisation de ladite fenêtre d'affichage du format d'affichage au sein dudit écran,
- modifier la configuration d'affichage dudit écran en cas de sélection d'un symbole de saisie utilisateur distinct du symbole de saisie utilisateur correspondant à la configuration d'affichage courante dudit écran, le dispositif d'affichage étant configuré pour afficher en permanence et/ou temporairement l'outil de configuration d'affichage interactif sur le ou les flux vidéo en cours d'affichage sur ledit écran, et dans lequel :
- la surface de ladite au moins une zone prédéterminée (Z₁, Z₂, Z₃, ..., Z_{N}) est strictement inférieure à la moitié de la surface de chaque écran (E₁, E₂, E₃, ..., E_{N}) de la pluralité d'écrans, et
- la localisation de ladite au moins une zone prédéterminée (Z₁, Z₂, Z₃, ..., Z_{N}), sur ledit écran, est distincte de la localisation d'une zone dédiée à l'affichage des informations indispensables au pilotage du véhicule, la localisation de ladite au moins une zone prédéterminée dépendant de la configuration d'affichage courante dudit écran.

2. Dispositif d'affichage selon la revendication 1, dans lequel, pour afficher temporairement l'outil de configuration, le dispositif d'affichage est activable par :
- pression mécanique sur un bouton physique dédié dudit écran ; et/ou
- pression tactile ou pointage sur un bouton virtuel dudit écran ; et/ou
- un geste tactile prédéterminé sur la surface dudit écran.

3. Dispositif d'affichage selon la revendication 1 ou 2, dans lequel, lorsque l'outil de configuration d'affichage interactif est configuré pour être affiché temporairement, le dispositif est configuré pour refermer l'outil de configuration automatiquement après activation d'un symbole de saisie utilisateur, et/ou après expiration d'un délai prédéterminé, et/ou après détection d'une saisie utilisateur en dehors de ladite au moins une zone prédéterminée d'affichage de l'outil de configuration.

4. Dispositif d'affichage selon l'une quelconque des revendications précédentes, dans lequel le dispositif d'affichage est configuré pour rendre sélectionnable un symbole de saisie utilisateur de ladite pluralité de symboles de saisie utilisateur en fonction de la configuration d'affichage courante dudit écran et/ou en fonction de la position dudit écran au sein de ladite planche de bord et/ou en fonction de la configuration d'affichage courante d'au moins un autre écran de ladite pluralité d'écrans, ledit au moins un autre écran étant distinct dudit écran.

5. Dispositif d'affichage selon l'une quelconque des revendications précédentes, dans lequel l'outil de configuration correspond à une liste ordonnée de l'ensemble des configuration d'affichage des formats affichables sur au moins un des écrans de ladite pluralité d'écrans, chaque ligne de la liste ordonnée étant associée à un format d'affichage dudit ensemble des formats d'affichage affichables et comprenant autant de symboles de saisie utilisateur que de configuration(s) d'affichage associée(s) audit format d'affichage de la ligne et affichable(s) au moins une fois sur ledit écran.

6. Dispositif d'affichage selon la revendication 5, dans lequel, lorsque l'outil de configuration d'affichage interactif est configuré pour être affiché temporairement, l'ordre de l'ensemble des configurations d'affichage des formats d'affichage affichables de la liste ordonnée est invariable d'un écran de la pluralité d'écrans à l'autre.

7. Dispositif d'affichage selon l'une quelconque des revendications précédentes, dans lequel le dispositif d'affichage est configuré pour afficher chaque symbole de saisie utilisateur selon quatre états distincts correspondant à :
- la configuration d'affichage courante,
- une configuration d'affichage affichable à partir de la configuration d'affichage courante,
- une configuration d'affichage au moins une fois affichable sur ledit écran mais non affichable à partir de la configuration d'affichage courante,
- une configuration d'affichage jamais affichable sur ledit écran.

8. Véhicule, tel qu'un aéronef, comprenant une planche de bord tout écran **caractérisé en ce qu'**il comprend en outre un dispositif d'affichage selon l'une quelconque des revendications précédentes.

9. Procédé (20) d'affichage pour planche de bord tout écran d'un système de pilotage de véhicule, le procédé (20) étant mis en oeuvre par un dispositif d'affichage du véhicule, ladite planche de bord comprenant une pluralité d'écrans, au moins deux écrans de la pluralité d'écrans étant propres à afficher simultanément des flux vidéo distincts associés respectivement à des formats d'affichages distincts, le dispositif comprenant pour chaque écran d'au moins une partie de la pluralité d'écrans un outil de configuration d'affichage interactif, pour chaque écran de ladite au moins une partie, le procédé comprend au moins :
- l'affichage (24) de l'outil de configuration dans au moins une zone prédéterminée dudit écran, **caractérisé en ce que** l'outil de configuration comprend une pluralité de symboles de saisie utilisateur,
chaque symbole étant associé à une configuration d'affichage correspondant à la combinaison d'un format d'affichage, d'une taille de fenêtre d'affichage dudit format d'affichage par rapport à la taille dudit écran, et d'une localisation de ladite fenêtre d'affichage du format d'affichage au sein dudit écran,
- la modification (28) de la configuration d'affichage dudit écran en cas de sélection d'un symbole de saisie utilisateur distinct du symbole de saisie utilisateur correspondant à la configuration d'affichage courante dudit écran,
l'outil de configuration d'affichage interactif étant affiché en permanence et/ou temporairement sur le ou les flux vidéo en cours d'affichage sur ledit écran :
- la surface de ladite au moins une zone prédéterminée (Z₁, Z₂, Z₃, ..., Z_{N}) étant strictement inférieure à la moitié de la surface de chaque écran (E₁, E₂, E₃, ..., E_{N}) de la pluralité d'écrans, et
- la localisation de ladite au moins une zone prédéterminée (Z₁, Z₂, Z₃, ..., Z_{N}), sur ledit écran, étant distincte de la localisation d'une zone dédiée à l'affichage des informations indispensables au pilotage du véhicule, la localisation de ladite au moins une zone prédéterminée dépendant de la configuration d'affichage courante dudit écran.

10. Produit programme d'ordinateur comportant des instructions logicielles qui, lorsqu'elles sont exécutées par un ordinateur, mettent en oeuvre un procédé d'affichage selon la revendication 9.

## Patentansprüche

1. Elektronische Anzeigevorrichtung für ein Vollbild-Armaturenbrett (GC) eines Fahrzeugsteuersystems, das Vollbild-Armaturenbrett (GC) umfassend eine Vielzahl von Bildschirmen (Ei, E₂, E₃, E_{N}) umfasst, wobei mindestens zwei Bildschirme der Vielzahl von Bildschirmen geeignet sind, um gleichzeitig unterschiedliche Videoströme anzuzeigen, die Anzeigevorrichtung umfassend für jeden Bildschirm von mindestens einem Teil der Vielzahl von Bildschirmen ein Tool (O₁, O₂, O₃, ..., O_{N}) zur Konfiguration der interaktiven Anzeige, wobei die Vorrichtung für jeden Bildschirm (E₁, E₂, E₃,..., E_{N}) des mindestens einen Teils zu Folgendem konfiguriert ist:
- Anzeigen, des Konfigurationstools (O₁, O₂, O₃,..., O_{N}) in mindestens einem vorbestimmten Bereich (Z₁, Z₂, Z₃,..., Z_{N}) des Bildschirms, **dadurch gekennzeichnet, dass** das Konfigurationstool eine Vielzahl von Benutzereingabesymbolen
umfasst, wobei jedes Symbol mit einer Anzeigekonfiguration assoziiert ist, die der Kombination eines Anzeigeformats (F1, F2, F3, ... F10), einer Fenstergröße (E₁W₁, E₁W₂, E_{N}W₁, E_{N}W₂) zur Anzeige des Anzeigeformats in Bezug auf die Größe des Bildschirms und einer Lokalisierung des Fensters zur Anzeige des Anzeigeformats innerhalb des Bildschirms assoziiert ist,
- Ändern der Anzeigekonfiguration des Bildschirms bei Auswahl eines Benutzereingabesymbols, das sich von dem Benutzereingabesymbol unterscheidet, das der aktuellen Anzeigekonfiguration des Bildschirms entspricht, wobei die Anzeigevorrichtung konfiguriert ist, um das interaktive Anzeigekonfigurationstool permanent und/oder zeitweise auf dem/den Videostrom/en anzuzeigen, der/die gerade auf dem Bildschirm angezeigt wird/werden, und wobei:
- die Fläche des mindestens einen vorbestimmten Bereichs (Z₁, Z₂, Z₃, ..., Z_{N}) strikt weniger als die Hälfte der Fläche jedes Bildschirms (E₁, E₂, E₃, ..., E_{N}) der Vielzahl von Bildschirmen ist, und
- die Lokalisierung des mindestens einen vorbestimmten Bereichs (Z₁, Z₂, Z₃, ..., Z_{N}) auf dem Bildschirm von der Lokalisierung eines Bereichs getrennt ist, der der Anzeige der für die Steuerung des Fahrzeugs unerlässlichen Informationen gewidmet ist, wobei die Lokalisierung des mindestens einen vorbestimmten Bereichs von der aktuellen Anzeigekonfiguration des Bildschirms abhängt.

2. Anzeigevorrichtung nach Anspruch 1, wobei die Anzeigevorrichtung zum vorübergehenden Anzeigen des Konfigurationstools durch Folgendes aktivierbar ist:
- mechanischen Druck auf eine dedizierte physische Taste des Bildschirms; und/oder
- Berührungsdruck oder Zeigen auf eine virtuelle Schaltfläche des Bildschirms; und/oder
- eine vorbestimmte Berührungsgeste auf der Oberfläche des Bildschirms.

3. Anzeigevorrichtung nach Anspruch 1 oder 2, wobei, wenn das Konfigurationstool für die interaktive Anzeige konfiguriert ist, um vorübergehend angezeigt zu werden, die Vorrichtung konfiguriert ist, um das Konfigurationstool nach Aktivierung eines Benutzereingabesymbols, und/oder nach Ablauf einer vorbestimmten Zeit und/oder nach der Erfassung einer Benutzereingabe außerhalb des mindestens einen vorbestimmten Anzeigebereichs des Konfigurationstools automatisch zu schließen.

4. Anzeigevorrichtung nach einem der vorherigen Ansprüche, wobei die Anzeigevorrichtung konfiguriert ist, um ein Benutzereingabesymbol aus der Vielzahl von Benutzereingabesymbolen abhängig von der aktuellen Anzeigekonfiguration des Bildschirms und/oder abhängig von der Position des Bildschirms innerhalb des Armaturenbretts und/oder abhängig von der aktuellen Anzeigekonfiguration mindestens eines weiteren Bildschirms aus der Vielzahl von Bildschirmen auswählbar zu machen, wobei der mindestens eine weitere Bildschirm von dem Bildschirm verschieden ist.

5. Anzeigevorrichtung nach einem der vorherigen Ansprüche, wobei das Konfigurationstool einer geordneten Liste der Gesamtheit der Anzeigekonfigurationen der Formate entspricht, die auf mindestens einem der mehreren Bildschirme anzeigbar sind, wobei jede Zeile der geordneten Liste mit einem Anzeigeformat der Gesamtheit der anzeigbaren Anzeigeformate assoziiert ist und so viele Benutzereingabesymbole umfasst wie Anzeigekonfiguration(en), die mit dem Anzeigeformat der Zeile assoziiert und mindestens einmal auf dem Bildschirm anzeigbar sind.

6. Anzeigevorrichtung nach Anspruch 5, wobei, wenn das interaktive Anzeigekonfigurationstool konfiguriert ist, um vorübergehend angezeigt zu werden, die Reihenfolge aller Anzeigekonfigurationen der anzeigbaren Anzeigeformate in der geordneten Liste von einem Bildschirm der Vielzahl von Bildschirmen zum anderen unveränderlich ist.

7. Anzeigevorrichtung nach einem der vorherigen Ansprüche, wobei die Anzeigevorrichtung konfiguriert ist, um jedes Benutzereingabesymbol in vier verschiedenen Zuständen anzuzeigen, die Folgendem entsprechen:
- der aktuellen Anzeigekonfiguration,
- einer anzeigbaren Anzeigekonfiguration ausgehend von der aktuellen Anzeigekonfiguration,
- einer Anzeigekonfiguration, die mindestens einmal auf dem Bildschirm angezeigt werden kann, aber nicht ausgehend von dem aktuellen Anzeigemuster heraus angezeigt werden kann,
- einer Anzeigekonfiguration, die niemals auf dem Bildschirm angezeigt werden kann.

8. Fahrzeug, wie beispielsweise ein Flugzeug, umfassend ein Vollbildschirm-Armaturenbrett, **dadurch gekennzeichnet, dass** es ferner eine Anzeigevorrichtung nach einem der vorherigen Ansprüche umfasst.

9. Anzeigeverfahren (20) für ein Armaturenbrett eines Fahrzeugsteuersystems, wobei das Verfahren (20) von einer Anzeigevorrichtung des Fahrzeugs durchgeführt wird, das Armaturenbrett umfassend eine Vielzahl von Bildschirmen, wobei mindestens zwei der Vielzahl von Bildschirmen geeignet sind, um gleichzeitig unterschiedliche Videoströme anzuzeigen, die jeweils mit unterschiedlichen Anzeigeformaten assoziiert sind, wobei die Vorrichtung für jeden Bildschirm mindestens eines Teils der Vielzahl von Bildschirmen ein interaktive Anzeigekonfigurationstool umfasst,
für jeden Bildschirm des mindestens eines Teils umfasst das Verfahren mindestens Folgendes:
- Anzeigen (24) des Konfigurationstools in mindestens einem vorbestimmten Bereich des Bildschirms, **dadurch gekennzeichnet, dass** das Konfigurationstool eine Vielzahl von Benutzereingabesymbolen umfasst, wobei jedes Symbol mit einer Anzeigekonfiguration, die der Kombination aus einem Anzeigeformat, einer Größe des Anzeigefensters des Anzeigeformats in Bezug auf die Größe des Bildschirms und einer Lokalisierung des Anzeigefensters des Anzeigeformats innerhalb des Bildschirms entspricht, assoziiert ist,
- Ändern (28) der Anzeigekonfiguration des Bildschirms bei Auswahl eines Benutzereingabesymbols, das sich von dem Benutzereingabesymbol unterscheidet, das der aktuellen Anzeigekonfiguration des Bildschirms entspricht, wobei das interaktive Anzeigekonfigurationstool permanent und/oder vorübergehend auf dem/den Videostrom/en angezeigt wird, der/die gerade auf dem Bildschirm angezeigt wird/werden:
- wobei die Fläche des mindestens einen vorbestimmten Bereichs (Z₁, Z₂, Z₃, ..., Z_{N}) strikt kleiner ist als die Hälfte der Fläche von jedem Bildschirm (E₁, E₂, E₃, ..., E_{N}) der Vielzahl von Bildschirmen, und
- die Lokalisierung des mindestens einen vorbestimmten Bereichs (Z₁, Z₂, Z₃, ..., Z_{N}) auf dem Bildschirm von der Lokalisierung eines Bereichs verschieden ist, der der Anzeige der für die Steuerung des Fahrzeugs unerlässlichen Informationen gewidmet ist, wobei die Lokalisierung des mindestens einen vorbestimmten Bereichs von der aktuellen Anzeigekonfiguration des Bildschirms abhängt.

10. Computerprogramm, umfassend Softwareanweisungen, die, wenn sie von einem Computer ausgeführt werden, ein Anzeigeverfahren nach Anspruch 9 durchführen.

## Claims

1. An electronic display device for a glass cockpit (GC) of a vehicle control system, said glass cockpit (GC) comprising a plurality of screens (E₁, E₂, E₃, ..., E_{N}), at least two screens of the plurality of screens being able to simultaneously display separate video streams respectively associated with different display formats,
the display device comprising, for each screen of at least part of the plurality of screens, an interactive display configuration tool (O₁, O₂, O₃, ..., O_{N}), the device being configured, for each screen (E₁, E₂, E₃, ..., E_{N}) of said at least one part, to:
- display the configuration tool (O₁, O₂, O₃, ..., O_{N}) in at least one predetermined zone (Z₁, Z₂, Z₃, ..., Z_{N}) of said screen, **characterized in that** the configuration tool comprises a plurality of user entry symbols, each symbol being associated with a display configuration corresponding to the combination of a display format (F1, F2, F3, ... F10), a display window size (E₁W₁, E₁W₂, E_{N}W₁, E_{N}W₂) of said display format relative to the size of said screen, and a location of said display window of the display format within said screen,
- modify the display configuration of said screen if a user entry symbol is selected that is different from the user entry symbol corresponding to the current display configuration of said screen,
the display device being configured to display the interactive display configuration tool continuously and/or temporarily on the video stream(s) being displayed on said screen, and wherein:
- the surface of said at least one predetermined zone (Z₁, Z₂, Z₃, ..., Z_{N}) is strictly smaller than half of the surface of each screen (E₁, E₂, E₃, ..., E_{N}) of the plurality of screens, and
- the location of said at least one predetermined zone (Z₁, Z₂, Z₃, ..., Z_{N}), on said screen, is different from the location of a zone dedicated to the display of information essential for the control of the vehicle, the location of said at least one predetermined zone depending on the current display configuration of said screen.

2. The display device according to claim 1, wherein, in order to display the configuration tool temporarily, the display device can be activated by:
- mechanical pressure on a dedicated physical button of said screen; and/or
- tactile pressure or pointing on a virtual button of said screen; and/or
- a predetermined tactile gesture on the surface of said screen.

3. The display device according to claim 1 or 2, wherein, when the interactive display configuration tool is configured to be displayed temporarily, the device is configured to close the configuration tool automatically after activation of the user entry symbol, and/or after expiration of a predetermined time period, and/or after detection of a user entry outside of said at least one predetermined display zone of the configuration tool.

4. The display device according to any one of the preceding claims, wherein the display device is configured to make a user entry symbol selectable from said plurality of user entry symbols as a function of the current display configuration of said screen and/or as a function of the position of said screen within said cockpit and/or as a function of the current display configuration of at least one other screen of said plurality of screens, said at least one other screen being separate from said screen.

5. The display device according to any one of the preceding claims, wherein the configuration tool corresponds to a sequenced list of the set of display configurations of the formats displayable on at least one of the screens of said plurality of screens, each row of the sequenced list being associated with the display format of said set of displayable display formats and comprising as many user entry symbols as there are display configuration(s) associated with said display format of the row and displayable at least once on said screen.

6. The display device according to claim 5, wherein, when the interactive display configuration tool is configured to be displayed temporarily, the order of the set of display configurations of the displayable display formats of the sequenced list is invariable from one screen of the plurality of screens to the next.

7. The display device according to any one of the preceding claims, wherein the display device is configured to display each user entry symbol according to four distinct states corresponding to:
- the current display configuration,
- a display configuration displayable from the current display configuration,
- a display configuration displayable at least once on said screen but not displayable from the current display configuration,
- a display configuration never displayable on said screen.

8. A vehicle, such as an aircraft, comprising a glass cockpit **characterized in that** it further comprises a display device according to any one of the preceding claims.

9. A display method (20) for a glass cockpit of a vehicle control system, said method (20) being implemented by a display device of the vehicle, said cockpit comprising a plurality of screens, at least two screens of the plurality of screens being able to simultaneously display separate video streams respectively associated with different display formats, the device comprising, for each screen of at least part of the plurality of screens, an interactive display configuration tool,
for each screen of said at least one part, the method comprises at least:
- displaying (24) the configuration tool in at least one predetermined zone of said screen, **characterized in that** the configuration tool comprises a plurality of user entry symbols, each symbol being associated with a display configuration corresponding to the combination of a display format, a display window size of said display format relative to the size of said screen, and a location of said display window of the display format within said screen,
- modifying (28) the display configuration of said screen if a user entry symbol is selected that is different from the user entry symbol corresponding to the current display configuration of said screen,
the interactive display configuration tool being displayed continuously and/or temporarily on the video stream(s) being displayed on said screen, and wherein:
- the surface of said at least one predetermined zone (Z₁, Z₂, Z₃, ..., Z_{N}) is strictly smaller than half of the surface of each screen (E₁, E₂, E₃, ..., E_{N}) of the plurality of screens, and
- the location of said at least one predetermined zone (Z₁, Z₂, Z₃, ..., Z_{N}), on said screen, is different from the location of a zone dedicated to the display of information essential for the control of the vehicle, the location of said at least one predetermined zone depending on the current display configuration of said screen.

10. A computer program product comprising software instructions which, when executed by a computer, carry out a display method according to claim 9.
